# EUROPÄISCHE PATENTSCHRIFT

(11) **EP 0 920 700 B1**
(45) Veröffentlichungstag und Bekanntmachung des Hinweises auf die Patenterteilung: **19.06.2002**
(21) Anmeldenummer: 97941835.7
(22) Anmeldetag: 21.08.1997
(51) Int. Cl.: H01B 19/00, G02B 6/44

(54) **VERFAHREN ZUR HERSTELLUNG EINES GEWICKELTEN ISOLIERROHRES**
METHOD OF PRODUCING A WOUND INSULATING PIPE
PROCEDE DE PRODUCTION D'UN TUBE ISOLANT ENROULE

(30) Priorität: 21.08.1996 DE 19635362
(43) Veröffentlichungstag der Anmeldung: 09.06.1999
(73) Patentinhaber: SIEMENS AKTIENGESELLSCHAFT, 80333 München (DE); MASCHINENFABRIK REINHAUSEN GmbH, 93059 Regensburg (DE)
(72) Erfinder: SCHULER, Klaus, D-13589 Berlin (DE); LORENZ, Dieter, D-12207 Berlin (DE); GROSS, Walther, D-91074 Herzogenaurach (DE); HAIN, Stefan, D-91090 Effeltrich (DE); LESSMANN-MIESKE, Hans-Henning, D-93073 Neutraubling (DE); SCHMUCK, Hans, D-93053 Regensburg (DE); STENZEL, Karl, D-93180 Deuerling (DE)
(74) Vertreter: Berg, Peter
(86) Internationale Anmeldenummer: DE9701869
(87) Internationale Veröffentlichungsnummer: WO9808230

(56) Entgegenhaltungen:
- EP-A- 0 146 845
- EP-A- 0 265 737
- EP-A- 0 720 181
- WO-A-94/06127
- DE-A- 2 755 734
- DE-A- 2 901 872
- DE-A- 3 815 717
- FR-A- 2 725 302
- US-A- 3 485 940
- US-A- 4 610 033
- PATENT ABSTRACTS OF JAPAN vol. 007, no. 214 (E-199), 21.September 1983 & JP 58 107037 A (TOKYO SHIBAURA DENKI KK), 25.Juni 1983,

## Beschreibung

Die Erfindung betrifft ein Verfahren zur Herstellung eines gewickelten Isolierrohres, insbesondere für einen Hochspannungsisolator, mit mindestens einem Kanal für nachträglich einziehbare Leiter, Lichtwellenleiter oder dergleichen.

Isolierrohre und Hochspannungs-Isolatoren mit integriertem Leiter, insbesondere Lichtwellenleiter, nachfolgend als LWL bezeichnet, sind in vielfältigen Ausführungsformen bekannt. Die EP 0 265 737 beschreibt eine solche Anordnung, wobei der LWL spiralförmig längs eines Lichtleiterträgers geführt ist; der Lichtleiterträger wiederum ist als isolierende Wendel ausgebildet, die sich im Hohlraum des Hochspannungs-Isolators befindet.

Eine weitere gattungsgemäße Anordnung ist aus der US 3,485,940 bekannt, dort ist ein LWL von einem Polyesterrohr umgeben, das in Längsrichtung durch den Strunk des Isolators geführt ist.

Die EP 0 146 845 beschreibt einen weiteren gattungsgemäßen Hochspannungs-Isolator, wobei der Lichtleiter in einer zwischen Strunk und Schirmkörpern angeordneten Zwischenschicht in einer Rille ebenfalls längs durch den Isolator geführt ist.

Bei den beschriebenen Hochspannungs-Isolatoren wird der LWL üblicherweise nachträglich in den vorgefertigten Isolator bzw. das Isolierrohr eingezogen. Aus der DE 27 55 734 ist es dazu bekannt, Längsnuten vorzusehen, die Kanäle bilden und die Leiter bzw. LWL aufnehmen und anschließend diese Kanäle zu schließen. In ähnlicher Weise ist es aus der FR 2 725 302 dazu bekannt, in der Wand des Isolators eine Rille in Form einer Spirale vorzusehen und in diese Rille ein stranggepreßtes, fortlaufendes Band aus Elastomer einzubringen. Danach wird der Leiter auf die obere Seite dieses Bandes gelegt und dann drückt man, z. B. durch Rollen, den optischen Wellenleiter und das Band zusammen, um es in den Boden der Rille einzulegen und in das Elastomermaterial einzubetten.

Aus der DE-A-29 01 872 ist es bekannt, einen LWL in einer in Längsrichtung verlaufenden Zwischenschicht vorzusehen, die Ausleitung aus dieser Zwischenschicht erfolgt durch Bohrungen.

Weiterhin ist aus der Offenlegungsschrift JP 58107037 ein Stützisolator bekannt, welcher mehrere Wickellagen eines in Harz getränkten Gewebes aufweist. Dort wird eine rohrförmige Struktur erzeugt, welche zunächst flexibel ist. Durch das Rohr wird dann ein Formstück geschoben, um das Rohr in eine gebogenen Form zu bringen. Mehrere derartig gebogener Rohre sind zu einem kreisringförmigen Isolator verbindbar.

Ein bekanntes Verfahren zur Herstellung von Hochspannungs-Isolatoren ist das Wickeln von Isolierrohren aus Epoxidharzen mit Laminataufbau aus Glasfasern oder synthetischen Fasern. Solche Isolierrohre sind aus der Firmenschrift "MR-Isolierrohre ROTAFIL® für die Hochspannungstechnik", Impressum VK23-0/88de, bekannt.

Bei solchen Isolierrohren aus gewickeltem GFK ist es nicht sinnvoll, wie in der o.a. FR-PS beschrieben, Nuten am äußeren Umfang vorzusehen und diese nachträglich durch Elastomermaterial wieder zu verschließen. Dies würde einerseits die Spannungsfestigkeit negativ beeinflussen und andererseits auch keine zusammenhängende, homogene, mechanisch widerstandsfähige äußere Oberfläche des Isolierkörpers ermöglichen.

Aufgabe der Erfindung ist es, ein geeignetes Verfahren zur Herstellung eines gewickelten Isolierrohres mit mindestens einem in den Rohrkörper integrierten Kanal zum nachträglichen Einziehen von Leitern bzw. LWL anzugeben, wobei die äußere Oberfläche des solcherart hergestellten Isolierrohres glatt und ohne Nuten - auch ohne nachträglich verschlossene Nuten - sein soll. Weiterhin soll die Kontur des fertig gewickelten Isolierrohres nicht von der Kreisform abweichen.

Diese Aufgabe wird durch ein Verfahren mit den Merkmalen des ersten Patentanspruches gelöst.

Die Unteransprüche betreffen besonders vorteilhafte Weiterbildungen des erfindungsgemaßen Verfahrens.

Ein besonderer Vorteil des erfindungsgemäßen Verfahrens besteht darin, daß die Oberfläche des fertig gewickelten Isolierrohres völlig glatt und homogen ist. Dies ist einerseits für eine hohe elektrische und dielektrische als auch mechanische Festigkeit wichtig, andererseits gestattet eine solche Oberfläche eine problemlose anschließende Bearbeitung oder Behandlung, z. B. ein Schleifen, Lackieren o.ä. Ein weiterer Vorteil des erfindungsgemäßen Verfahrens besteht darin, daß trotz des im Laufe des Verfahrens erzeugten Leerkanales zum nachträglichen Einzug des oder der LWL oder dergleichen keine Abweichung von der Kreisform auftritt.

Die Erfindung soll nachfolgend an einem Ausführungsbeispiel noch näher erläutert werden.

Die Figuren zeigen:

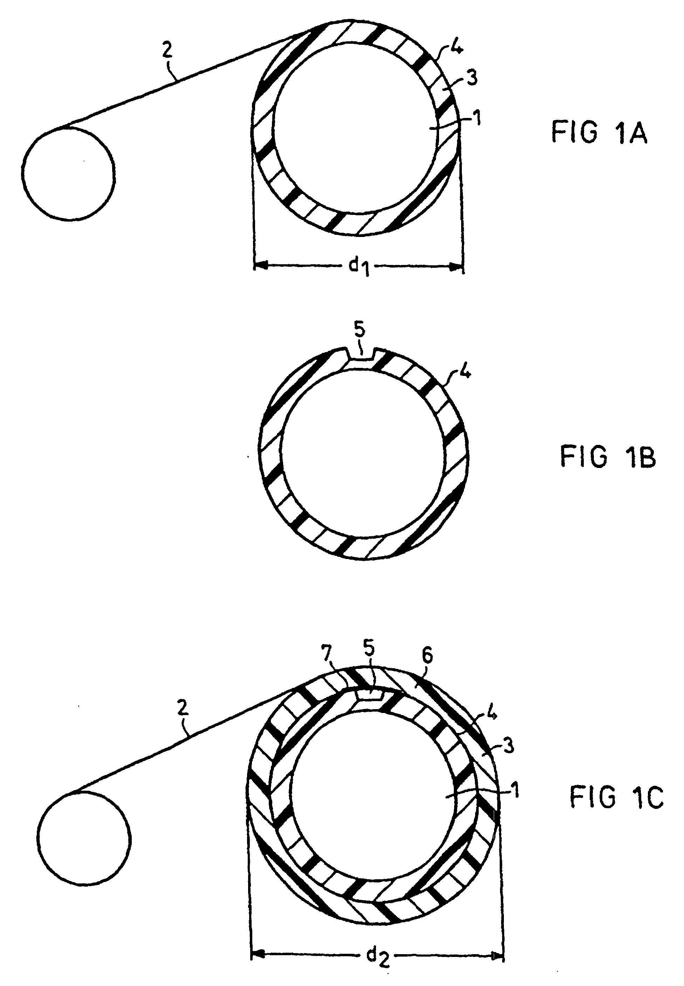

Fig. 1A) bis C) drei unterschiedliche Phasen des erfindungsgemäßen Verfahrens bei der Herstellung eines Isolierrohres,

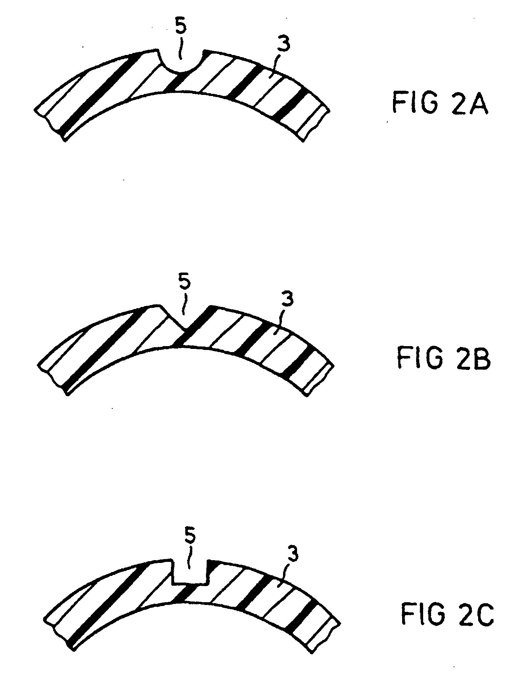

Fig. 2A) bis C) mögliche vorteilhafte Nutquerschnitte, die im Verlauf des erfindungsgemäßen Verfahrens aufgebracht werden.

Die wesentlichen Verfahrensschritte sind folgende:
A) Auf einen Wickeldorn 1 einer an sich bekannten Wickelmaschine werden erste Lagen 3 des aufzuwickelnden Materiales 2, beispielsweise von Rovings, eines Bandes oder von Fäden, bis zu einem bestimmten Durchmesser d₁ aufgewickelt und mit Harz getränkt. Anschließend werden diese ersten Lagen 3 auf bekannte Weise zumindest weitestgehend ausgehärtet. Auf diese Weise entsteht ein Laminataufbau; besonders vorteilhaft ist es, als Harz Epoxidharz einzusetzen und als aufzuwickelndes Material Glas- oder synthetische Fasern, Polyesterfasern etwa, vorzusehen.
   Es ist auch ein sog. Mischlaminataufbau möglich, wobei beispielsweise innenliegend, d. h. direkt auf dem Wickeldorn, ein Polyestervlies vorgesehen wird, auf den das aufzuwikkelnde Material, z. B. Glasfasern, aufgebracht wird.
B) In die entstandene Oberfläche 4 werden eine oder mehrere Nuten 5 eingefräst oder auf andere Weise eingebracht. Besonders vorteilhaft sind die Nut bzw. die Nuten 5 so ausgebildet, daß sie sich in Längsrichtung oder spiralförmig in Umfangsrichtung in der Oberfläche 4 erstrecken.
C) Anschließend wird weitergewickelt, d. h. es werden weitere Lagen 6 des aufzuwickelnden Materiales 2 aufgewickelt, bis der Enddurchmesser d₂ des Isolierrohres erreicht ist.
   Dabei ist es bei einem Mischlaminataufbau durchaus möglich, nacheinander unterschiedliche Materialien aufzuwickeln, so daß die ersten Lagen 3 und die weiteren Lagen 6 sowohl in sich als auch untereinander aus unterschiedlichen Werkstoffen bestehen können. Beispielsweise ist es möglich, auf eine Schicht aus Glasfasern noch eine Deckschicht aus Polyesterfasern aufzuwickeln.

Besonders vorteilhaft kann es in vielen Fällen sein, nach dem Einfräsen der Nut bzw. der Nuten 5 diese zunächst mit einer Abdeckung 7 zu versehen, um zu vermeiden, daß beim anschließenden Weiterwickeln diese Nuten 5 mit Harz vollaufen. Diese Abdeckung 7 kann aus einer aufgewickelten, den gesamten Umfang umschließenden Schutzlage bestehen, es ist auch möglich, nur im Bereich der Nut 5 selbst eine solche Abdeckung 7 vorzusehen, indem etwa ein Schutzprofil in die Nut 5 eingedrückt wird, oder eine streifenförmige Folie o. ä, über die Nut 5 zu kleben.

Weiterhin ist es in vielen Fällen vorteilhaft, nach dem Aufbringen der Nut 5 die Oberfläche 4 vorzubehandeln, dies kann etwa auf mechanischen Wege durch Aufzurauhen oder auf chemischem Wege durch Primerbehandlung erfolgen, um die Haftung der nachfolgend aufzuwickelnden weiteren Lagen 6 auf dieser Oberfläche 4 zu verbessern. Wurde eine Abdeckung 7 zusätzlich aufgebracht, ist es natürlich besonders vorteilhaft, wenn auch deren äußere Oberfläche vorbehandelt wird.

Diese Vorbehandlung kann beispielsweise durch Schleifen, das die Oberfläche aufrauht, erfolgen; es kann die gesamte Oberfläche 4 oder auch nur bestimmte Bereiche davon betreffen.

## Patentansprüche

1. Verfahren zur Herstellung eines gewickelten Isolierrohres, insbesondere für einen Hochspannungsisolator, mit mindestens einem Kanal für nachträglich einziehbare Leiter, Lichtwellenleiter oder dergleichen., mit folgenden Verfahrensschritten:
- auf einen Wickeldorn (1) werden erste Lagen (3) eines aufzuwickelnden Materials (2), insbesondere von Rovings, eines Bandes oder von Fäden aus Glas oder synthetischem Material, bis zu einem bestimmten Durchmesser (d₁) aufgewickelt und mit Harz getränkt, derart, daß eine Armierung entsteht,
- nachfolgend wird diese Armierung zumindest soweit ausgehärtet, daß die entstandene Oberfläche (4) mechanisch bearbeitbar ist,
- in die Oberfläche (4) werden zur Bildung wenigstens eines Kanals eine oder mehrere Nuten (5) eingebracht, die sich vorzugsweise in Längsrichtung oder spiralförmig in der Oberfläche (4) erstrecken,
- anschließend werden weitere Lagen (6) eines aufzuwickelnden Materials (2) aufgewickelt, bis der Enddurchmesser (d₂) des Isolierrohres erreicht ist.

2. Verfahren nach Patentanspruch 1,
**dadurch gekennzeichnet, daß**,
vor dem Aufwickeln weiterer Lagen (6) die mindestens eine Nut (5) mit einer Abdeckung (7) versehen wird.

3. Verfahren nach Patentanspruch 1 oder 2,
**dadurch gekennzeichnet, daß**
vor dem Aufwickeln weiterer Lagen (6) die Oberfläche (4) und/oder die Abdeckung (7) mechanisch oder chemisch vorbehandelt wird bzw. werden.

## Claims

1. Method of producing a wound insulating pipe, in particular for a high-voltage insulator, with at least one duct for conductors, optical waveguides or the like which can be subsequently inserted, having the following method steps:
- first layers (3) of a material (2) to be wound on, in particular rovings, a strip or filaments of glass or synthetic material, are wound onto a winding spindle (1) up to a specific diameter (d₁) and impregnated with resin in such a way that an armouring is produced,
- subsequently, this armouring is cured, at least to the extent that the surface (4) produced can be machined,
- to form at least one duct, one or more grooves (5) are made in the surface (4), extending preferably in the longitudinal direction or spirally in the surface (4),
- subsequently, further layers (6) of a material (2) to be wound on are wound on until the final diameter (d₂) of the insulating tube is attained.

2. Method according to Patent Claim 1, **characterized in that**, before the winding-on of further layers (6), the at least one groove (5) is provided with a covering (7).

3. Method according to Patent Claim 1 or 2, **characterized in that**, before the winding-on of further layers (6), the surface (4) and/or the covering (7) is or are mechanically or chemically pretreated.

## Revendications

1. Procédé de production d'un tube isolant enroulé, notamment pour un isolateur à haute tension, comprenant au moins un canal pour des conducteurs, des fibres optiques ou analogues qui peuvent être introduits ultérieurement, comprenant les stades suivants de procédé :
- on enroule sur un mandrin (1) d'enroulement de premières couches (3) d'un matériau (2) à enrouler, notamment de rovings, d'une bande ou de fils de verre ou de matière synthétique jusqu'à un diamètre (d₁) déterminé et on les imprègne de résine de façon à créer une armure,
- on durcit ensuite cette armure au moins jusqu'à ce que la surface (4) créée puisse être usinée mécaniquement,
- on ménage dans la surface (4), pour former au moins un canal, une gorge (5) ou plusieurs gorges (5) qui s'étendent de préférence dans la direction longitudinale ou en forme de spirale à la surface (4),
- on enroule ensuite d'autres couches (2) d'un matériau (2) à enrouler jusqu'à atteindre le diamètre (d₂) final du tube isolant.

2. Procédé suivant la revendication 1, **caractérisé en ce qu'**avant l'enroulement d'autres couches (6) la au moins une gorge (5) est munie d'un recouvrement (7).

3. Procédé suivant la revendication 1 ou 2, **caractérisé en ce qu'**avant l'enroulement d'autres couches (6) la surface (4) et/ou le recouvrement (7) est ou sont prétraités mécaniquement ou chimiquement.
